# EUROPEAN PATENT APPLICATION

(11) **EP 3 480 327 A1**
(43) Date of publication of application: **08.05.2019**
(21) Application number: 17806593.4
(22) Date of filing: 29.05.2017
(51) Int. Cl.: C22C 28/00, C22F 1/16, F25B 21/00, F28F 21/08, H01F 1/00, C22F 1/00

(54) **GADOLINIUM WIRE MATERIAL, METHOD FOR MANUFACTURING SAME, METAL-COATED GADOLINIUM WIRE MATERIAL USING SAME, HEAT EXCHANGER, AND MAGNETIC REFRIGERATION DEVICE**

(30) Priority: 30.05.2016 JP 2016107556; 23.05.2017 JP 2017101666
(71) Applicant: Fujikura, Ltd., Tokyo 135-8512 (JP)
(72) Inventor: NOMURA, Ryujiro, Sakura-shi Chiba 285-8550 (JP); KIZAKI, Takeshi, Sakura-shi Chiba 285-8550 (JP); UENO, Kota, Sakura-shi Chiba 285-8550 (JP); TAKEUCHI, Katsuhiko, Sakura-shi Chiba 285-8550 (JP); KONDO, Masahiro, Sakura-shi Chiba 285-8550 (JP); ISHIKAWA, Kohki, Sakura-shi Chiba 285-8550 (JP)
(74) Representative: Ter Meer Steinmeister & Partner
(86) International application number: PCT/JP2017/019883
(87) International publication number: WO 2017/209038

(57) **Abstract**

Provided is a gadolinium wire rod including gadolinium as a main component, wherein the average particle size of a segregated phase containing fluorine atom and/or chlorine atom is 2 µm or less. The present invention can provide a gadolinium wire rod high in strength and excellent in processability.

## Description

### TECHNICAL FIELD

The present invention relates to a gadolinium wire rod including gadolinium as a main component, a method for producing the same, and a metal-covered gadolinium wire rod, a heat exchanger and a magnetic refrigerator using the same.

For the designated countries which permit the incorporation of documents by reference, the content described in Japanese Patent Application No. 2016-107556 filed on May 30, 2016 and the content described in Japanese Patent Application No. 2017-101666 filed on May 23, 2017 are herein incorporated by reference as a part of the description of the present application.

### BACKGROUND ART

Magnetic refrigeration technologies utilizing the magnetocaloric effect have been studied. As one promising magnetic refrigeration technology, an AMR (Active Magnetic Refrigeration) cycle is exemplified. In such a magnetic refrigeration technology, effective methods for increases in efficiency and output include a method including increasing the surface area of a magnetic refrigeration material to thereby enhance the heat-exchange efficiency from the magnetic refrigeration material to a refrigerant, and a method including ensuring the flow path for a refrigerant to thereby reduce the pressure loss. The magnetic refrigeration material for use in such a magnetic refrigeration technology usually has a particle shape, and such a particle-shaped magnetic refrigeration material is inserted into a tubular case to provide a heat exchanger. There has been proposed a magnetic refrigerator in which such a heat exchanger is adopted (see, for example, Patent Document 1). On the other hand, there has been proposed a method for increases in efficiency and output by using a magnetic refrigeration material processed into a cylinder, whereas a common magnetic refrigeration material has a particle shape (see, for example, Patent Document 2).

### PRIOR ART DOCUMENTS

### PATENT DOCUMENTS

Patent Document 1: Japanese Patent Publication No. 2010-77484
Patent Document 2: Japanese Patent Publication No. 2013-64588

### SUMMARY OF THE INVENTION

### PROBLEM TO BE SOLVED BY THE INVENTION

In Patent Document 2 above, the technique for processing a magnetic refrigeration material into a cylinder is disclosed, but it is demanded to process a magnetic refrigeration material so that a small wire diameter is obtained for further increases in efficiency and output. On the other hand, gadolinium serving as a magnetic refrigeration material is low in mechanical strength and is difficult to process into a wire rod having a small wire diameter (for example, a wire rod having a wire diameter of less than 1 mm).

An object of the present invention is to provide a gadolinium wire rod high in strength and excellent in processability. Another object of the present invention is to provide a method for producing such a gadolinium wire rod, a metal-covered gadolinium wire rod in which a clad layer including other metal is provided on the outer periphery of the gadolinium wire rod, and a heat exchanger and a magnetic refrigerator using the gadolinium wire rod and the metal-covered gadolinium wire rod.

### MEANS FOR SOLVING THE PROBLEMS

[1] A gadolinium wire rod according to a first aspect of the present invention is a gadolinium wire rod including gadolinium as a main component,
   wherein an average particle size of a segregated phase containing fluorine atom and/or chlorine atom is 2 µm or less.
[2] A gadolinium wire rod according to second aspect of the present invention is a gadolinium wire rod including gadolinium as a main component,
   wherein a presence density of a segregated phase containing fluorine atom and/or chlorine atom with a particle size of 5 µm or more is 4.7 × 10⁻⁵/µm² or less.
[3] The present invention can be configured so that the gadolinium wire rod is a drawn wire rod.
[4] The present invention can be configured so that the drawn wire rod has a diameter of 1 mm or less.
[5] In the metal-covered gadolinium wire rod according to the present invention, a clad layer including, as a main component, a metal other than gadolinium is provided on an outer periphery of the gadolinium wire rod according to the present invention.
[6] In the present invention, an area of a cross section of the gadolinium wire rod on a cross section of the metal-covered gadolinium wire rod perpendicular to a longitudinal direction thereof can be 55 to 99% based on a total of the area of a cross section of the gadolinium wire rod and an area of a cross section of the clad layer.
[7] In the present invention, the clad layer can include copper, aluminum, nickel and/or an alloy thereof.
[8] In the present invention, the clad layer can further include a carbon nanotube.
[9] The method for producing a gadolinium wire rod according to the present invention includes:
   a step of providing a gadolinium casting material including gadolinium as a main component; and
   a step of hot-processing the gadolinium casting material to provide a gadolinium wire rod.
[10] The present invention can be configured so that the method further includes a step of drawing the gadolinium wire rod that is hot-processed.
[11] The heat exchanger according to the present invention includes:
   a plurality of wire rods formed of a magnetic refrigeration material; and
   a case housing filled with the plurality of wire rods;
   wherein the wire rods are each the gadolinium wire rod according to the present invention or the metal-covered gadolinium wire rod according to the present invention.
[12] The magnetic refrigerator according to the present invention includes the heat exchanger according to the present invention.

### EFFECT OF THE INVENTION

The present invention can provide a gadolinium wire rod high in strength and excellent in processability. The present invention can also provide a method for producing such a gadolinium wire rod, a metal-covered gadolinium wire rod in which a clad layer including other metal is provided on the outer periphery of the gadolinium wire rod, and a heat exchanger and a magnetic refrigerator which are obtained by using the gadolinium wire rod and the metal-covered gadolinium wire rod and which are excellent in heat-exchange efficiency.

### BRIEF DESCRIPTION OF DRAWINGS

Figure 1(A) is a reflection electron image of a gadolinium wire rod of Example 1, and Figure 1(B) is a reflection electron image after binarization processing, where the reflection electron image of Figure 1(A) is subjected to binarization processing.
Figure 2 illustrates the entire configuration of a magnetic refrigerator including an MCM heat exchanger according to one embodiment of the present invention.
Figure 3 is an exploded perspective view illustrating the configuration of an MCM heat exchanger according to one embodiment of the present invention.
Figure 4(A) is a reflection electron image of a drawn wire rod of Example 1, and Figure 4(B) is a reflection electron image after binarization processing, where the reflection electron image of Figure 4(A) is subjected to binarization processing.
Figure 5(A) is a reflection electron image of a gadolinium wire rod of Example 2, and Figure 5(B) is a reflection electron image after binarization processing, where the reflection electron image of Figure 5(A) is subjected to binarization processing.
Figure 6(A) is a reflection electron image of a gadolinium wire rod of Comparative Example 1, and Figure 6(B) is a reflection electron image after binarization processing, where the reflection electron image of Figure 6(A) is subjected to binarization processing.
Figure 7(A) is a reflection electron image of a drawn wire rod of Comparative Example 1, and Figure 7(B) is a reflection electron image after binarization processing, where the reflection electron image of Figure 7(A) is subjected to binarization processing.
Figure 8(A) is a reflection electron image of a gadolinium wire rod of Comparative Example 2, and Figure 8(B) is a reflection electron image after binarization processing, where the reflection electron image of Figure 8(A) is subjected to binarization processing.
Figure 9(A) is a reflection electron image of a gadolinium wire rod of Comparative Example 3, and Figure 9(B) is a reflection electron image after binarization processing, where the reflection electron image of Figure 9(A) is subjected to binarization processing.
Figure 10 is a reflection electron image of a cross section of a drawn wire rod (metal-covered gadolinium wire rod) of Example 3.
Figure 11 is a reflection electron image of a cross section of a drawn wire rod (metal-covered gadolinium wire rod) of Example 4.
Figure 12 is a reflection electron image of a cross section of a drawn wire rod (metal-covered gadolinium wire rod) of Example 5.
Figure 13 is a reflection electron image of a cross section of a drawn wire rod (metal-covered gadolinium wire rod) of Reference Example 1.

### DESCRIPTION OF EMBODIMENTS

### <<Gadolinium wire rod according to first embodiment>>

Hereinafter, a gadolinium wire rod according to a first embodiment of the present invention will be described.

The gadolinium wire rod according to the first embodiment of the present invention is a gadolinium wire rod including gadolinium as a main component,
wherein the average particle size of a segregated phase containing fluorine atom and/or chlorine atom is controlled within the range of 2 µm or less.

The gadolinium wire rod according to the first embodiment may include gadolinium (Gd) as a main component, or may include a gadolinium alloy. The gadolinium wire rod according to the first embodiment may include gadolinium as a main component, and the content of gadolinium in the gadolinium wire rod is preferably 80% by mass or more, more preferably 95% by mass or more, further preferably 99% by mass or more. When the gadolinium wire rod according to the first embodiment includes gadolinium as a main component in the form of a gadolinium alloy, the content of gadolinium in the gadolinium wire rod is preferably 50% by mass or more, more preferably 60% by mass or more, further preferably 70% by mass or more. Examples of the gadolinium alloy include an alloy of gadolinium and a rare-earth element. Examples of the rare-earth element include Y, Sc, La, Ce, Pr, Nd, Pm, Sm, Eu, Tb, Dy, Ho, Er, Tm, Yb and Lu, and among them, an alloy of gadolinium and Y, Gd₉₅Y₅, and the like are exemplified.

The gadolinium wire rod according to the first embodiment usually includes small amounts of unavoidable impurities. Examples of such unavoidable impurities include oxide-based impurities including carbon and oxygen, halogen-based impurities such as fluorine and chlorine, and rare metal-based impurities such as tungsten.

In view of such circumstances, the present inventors have made intensive studies focused on processability and strength of a wire rod including gadolinium as a main component, and have found that impurities included in a gadolinium wire rod, in particular, a segregated phase containing fluorine atom and/or chlorine atom, serve as the point of origin of cracking, to result in a reduction in the strength of the wire rod and also deterioration in processability during various processings such as drawing (extending).

The present inventors have then made further studies on such a problem, and thus have found that such a problem can be effectively solved by controlling the average particle size of a segregated phase containing fluorine atom and/or chlorine atom included in such a wire rod including gadolinium as a main component to 2 µm or less. Specifically, the present inventors have found that the average particle size of the segregated phase containing fluorine atom and/or chlorine atom can be 2 µm or less to thereby allow a gadolinium wire rod to be high in strength and excellent in characteristics of various processings such as drawing (extending), and furthermore allow a drawn wire rod obtained by drawing to also have a high strength.

In the first embodiment, the segregated phase containing fluorine atom and/or chlorine atom means a phase where a fluorine atom and/or a chlorine atom are/is localized (a phase which contains a fluorine atom and/or a chlorine atom in large amounts), and may be any of phases such as a phase where a fluorine atom and/or a chlorine atom are/is contained in the form of a fluoride and/or chloride of gadolinium, and a phase where a fluorine atom and/or a chlorine atom are/is contained in the form of an oxide, nitride or the like.

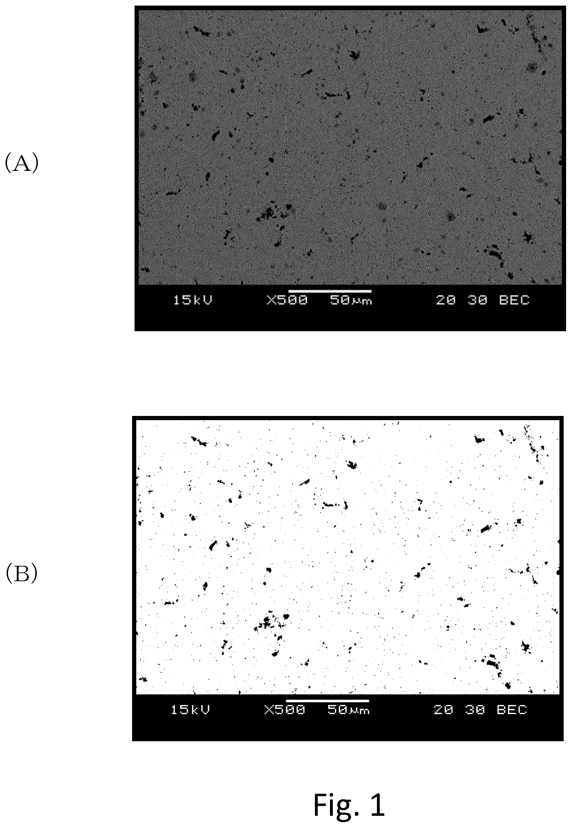

The segregated phase containing fluorine atom and/or chlorine atom is, for example, a phase where a fluorine atom and/or a chlorine atom are/is localized to an extent such that the fluorine atom and/or chlorine atom concentration detected is 1% or more when the total atom concentration of gadolinium, fluorine, chlorine, calcium, iron, oxygen, yttrium and tungsten elements is taken as 100% at a measurement point in measurement of the strength of fluorine atom and/or chlorine atom detected on any cross section perpendicular to the wire rod longitudinal direction of the gadolinium wire rod, according to a componential analysis method by EDS (Energy Dispersive Spectroscopy) analysis. These can be detected by, for example, subjecting any cross section perpendicular to the wire rod longitudinal direction of the gadolinium wire rod to measurement of a reflection electron image with a scanning electron microscope (SEM). Specifically, these can be detected by performing binarization at a predetermined threshold by use of image analysis with respect to the reflection electron image obtained with a scanning electron microscope. For example, Figure 1(A) and Figure 1(B) illustrate a reflection electron image of a cross section of a gadolinium wire rod according to Examples of the present invention and a reflection electron image after binarization by image analysis with respect to the reflection electron image of Figure 1(A), respectively. In Figure 1(B), the segregated phase containing fluorine atom and/or chlorine atom is detected as a heterogeneous phase illustrated by a black color. Herein, the predetermined threshold for use in binarization may be set to a threshold at which a phase where a fluorine atom and/or a chlorine atom are/is localized to an extent such that the fluorine atom and/or chlorine atom concentration detected is 1% or more when the total atom concentration of gadolinium, fluorine, chlorine, calcium, iron, oxygen, yttrium and tungsten elements, detected according to a componential analysis method or the like by EDS (Energy Dispersive Spectroscopy) analysis, is taken as 100% at a measurement point of the measurement region of any cross section perpendicular to the wire rod longitudinal direction of the gadolinium wire rod.

Alternatively, a secondary electron image obtained by measurement with a scanning electron microscope may be used in combination in the above method to further analyze the heterogeneous phase illustrated by a black color in Figure 1(B).

The segregated phase containing fluorine atom and/or chlorine atom thus detected can be then subjected to particle size measurement and the arithmetic average of the obtained particle size measurement results can be determined to thereby determine the average particle size of the segregated phase containing fluorine atom and/or chlorine atom. Specifically, any five locations (N = 5) on the cross section perpendicular to the wire rod longitudinal direction of the gadolinium wire rod are subjected to reflection electron image measurement in the visual field range of 256 µm × 166 µm, and five reflection electron images obtained by measurement in the visual field range of 256 µm × 166 µm are used to determine the average particle size. Herein, the segregated phase containing fluorine atom and/or chlorine atom is approximated to a circle having the same area by use of image analysis technique to thereby determine a circle equivalent diameter, and the circle equivalent diameter is defined as the particle size of each segregated phase. Furthermore, in average particle size measurement, the average particle size is to be determined under the assumption that a heterogeneous phase with a particle size of 1 µm or less does not correspond to the segregated phase containing fluorine atom and/or chlorine atom in calculation of the average particle size, from the viewpoint that any measurement error and any influence of a heterogeneous phase other than the segregated phase containing fluorine atom and/or chlorine atom are removed.

Instead of the above method where measurement is conducted at any five locations on the cross section perpendicular to the wire rod longitudinal direction, there may be adopted a method including cutting the gadolinium wire rod at any five locations to obtain any five cross sections perpendicular to the wire rod longitudinal direction, subj ecting each of the resulting five cross sections (N = 5) to reflection electron image measurement in the visual field range of 256 µm × 166 µm, and using five reflection electron images obtained by the measurement in the visual field range of 256 µm × 166 µm to determine the average particle size. With respect to the measurement range on each cut cross section, when the size of the cut cross section is a size where the measurement in the visual field range of 256 µm × 166 µm can be made, the measurement may be conducted in the visual field range of 256 µm × 166 µm, or when the size of the cut cross section is a size where the measurement in the visual field range of 256 µm × 166 µm cannot be made (the size of the cut cross section is less than 256 µm × 166 µm), the measurement may be conducted on the entire cut cross section. In particular, when the measurement in the visual field range of 256 µm × 166 µm cannot be made on one cross section (the size of the cut cross section is less than 256 µm × 166 µm), for example, when the wire diameter of the gadolinium wire rod is small, such a method is desirably adopted.

In the gadolinium wire rod of the first embodiment, the average particle size of the segregated phase containing fluorine atom and/or chlorine atom is 2 µm or less, preferably 1.8 µm or less. If the average particle size of the segregated phase containing fluorine atom and/or chlorine atom is more than 2 µm, the segregated phase serves as the point of origin to easily cause cracking, thereby deteriorating the strength of the gadolinium wire rod and characteristics of various processings such as drawing (extending). On the other hand, when the average particle size of the segregated phase containing fluorine atom and/or chlorine atom is 2 µm or less, the gadolinium wire rod can be high in strength and excellent in characteristics of various processings such as drawing (extending).

A method for producing the gadolinium wire rod of the first embodiment is not particularly limited, and a method is preferable which includes cutting out a round rod material having a predetermined diameter from a casting material including gadolinium as a main component, and repeating hot swaging at a reduction of area of 10 to 50% with the round rod material cut out being pre-heated so as to perform such processing until the final reduction of area after hot swaging preferably reaches 90% or more, more preferably 95% or more, further preferably 97% or more. The pre-heating temperature here is preferably 400°C or more, more preferably 500°C or more, further preferably 600°C or more. According to the first embodiment, it is considered that such repeated hot swaging can allow a phase containing a fluorine atom and/or a chlorine atom in large amounts and included in gadolinium and/or a gadolinium alloy to become finer. Herein, although hot swaging is exemplified in the first embodiment, hot-processing is not particularly limited to hot swaging, and any method including other hot-processing, for example, casting, rolling or extrusion can be used as long as the phase containing a fluorine atom and/or a chlorine atom in large amounts can become suitably finer.

The gadolinium wire rod of the first embodiment, thus obtained, preferably has a wire diameter of 2 to 10 mm.

In the first embodiment, the gadolinium wire rod of the first embodiment, thus obtained, may be drawn (extended) using a die or the like, to provide a drawn wire rod. In particular, the gadolinium wire rod of the first embodiment is controlled so that the average particle size of the segregated phase containing fluorine atom and/or chlorine atom is 2 µm or less, and therefore is high in strength and excellent in characteristics of processings such as drawing (extending) and can be thus drawn (extended) to suitably provide a drawn wire rod. In this case, the drawn wire rod obtained is also controlled so that the average particle size of the segregated phase containing fluorine atom and/or chlorine atom is 2 µm or less, more preferably 1.8 µm or less, and therefore is again high in strength and excellent in processability.

The drawn wire rod of the first embodiment thus obtained is prepared using the gadolinium wire rod of the first embodiment, and therefore the wire diameter thereof can be preferably as fine as 0.1 to 1.0 mm, more preferably 0.1 to 0.5 mm. Thus the drawn wire rod is not only high in strength and excellent in processability, but also relatively high in surface area. Therefore, when used as the magnetic refrigeration material in the magnetic refrigeration technology utilizing the magnetocaloric effect, the drawn wire rod of the first embodiment is high in heat-exchange efficiency with the refrigerant, and thus is suitable as the magnetic refrigeration material.

### <<Gadolinium wire rod according to second embodiment>>

Next, a gadolinium wire rod according to a second embodiment of the present invention will be described.

The gadolinium wire rod according to the second embodiment of the present invention is a gadolinium wire rod including gadolinium as a main component,
wherein the presence density of a segregated phase containing fluorine atom and/or chlorine atom with a particle size of 5 µm or more is 4.7 × 10⁻⁵/µm² or less.

The gadolinium wire rod according to the second embodiment may include gadolinium (Gd) as a main component, or may include a gadolinium alloy, as in the first embodiment described above. Also in the gadolinium wire rod according to the second embodiment, the content of gadolinium, and the content of a gadolinium alloy in the case where gadolinium is contained in the form of a gadolinium alloy are preferably within the same ranges as described for the gadolinium wire rod according to the first embodiment described above.

The gadolinium wire rod according to the second embodiment also usually includes small amounts of unavoidable impurities as in the first embodiment described above.

The present inventors have then found that the presence density of a segregated phase of 5 µm or more (namely, the number present per unit area), in a segregated phase containing fluorine atom and/or chlorine atom unavoidably included in a wire rod including gadolinium as a main component, can be equal to or less than a predetermined value to thereby allow a gadolinium wire rod to be high in strength and excellent in characteristics of various processings such as drawing (extending), and furthermore allow a drawn wire rod obtained by drawing to also have a high strength. Specifically, the presence density of a segregated phase containing fluorine atom and/or chlorine atom with a particle size of 5 µm or more (hereinafter, appropriately referred to as "the presence density of the segregated phase of 5 µm or more".) is set to 4.7 × 10⁻⁵/µm² or less.

In the second embodiment, the segregated phase containing fluorine atom and/or chlorine atom means a phase where a fluorine atom and/or a chlorine atom are/is localized, and may be any of phases such as a phase where a fluorine atom and/or a chlorine atom are/is contained in the form of a fluoride and/or chloride of gadolinium, and a phase where a fluorine atom and/or a chlorine atom are/is contained in the form of an oxide, nitride or the like, as in the first embodiment described above, and can be detected by, for example, reflection electron image measurement with a scanning electron microscope (SEM). Alternatively, a secondary electron image obtained by measurement with a scanning electron microscope may also be used in combination, as in the first embodiment.

The presence density of the segregated phase of 5 µm or more can be determined by subjecting the segregated phase containing fluorine atom and/or chlorine atom detected in the same manner as in the first embodiment described above to particle size measurement, counting the number of segregated phase(s) of 5 µm or more, and dividing the number of segregated phase(s) of 5 µm or more by the measurement area (unit: µm²). Specifically, the presence density of the segregated phase of 5 µm or more can be determined by cutting the gadolinium wire rod at any five locations to provide any five cross sections perpendicular to the wire rod longitudinal direction, subjecting the resulting five cross sections (N = 5) to reflection electron image measurement in the viewing field range depending on the size of each of the cut cross sections, and counting the number of segregated phase(s) of 5 µm or more and dividing it by the measurement area (unit: µm²). Herein, the segregated phase containing fluorine atom and/or chlorine atom detected is approximated to a circle having the same area by use of image analysis technique to thereby determine a circle equivalent diameter, and the circle equivalent diameter is defined as the particle size of each segregated phase. With respect to the measurement range on each cut cross section, when the size of the cut cross section is a size where the measurement in the visual field range of 256 µm × 166 µm can be made, the measurement may be conducted in the visual field range of 256 µm × 166 µm, or when the size of the cut cross section is a size where the measurement in the visual field range of 256 µm × 166 µm cannot be made (the size of the cut cross section is less than 256 µm × 166 µm), the measurement may be conducted on the entire cut cross section.

In the gadolinium wire rod of the second embodiment, the presence density of the segregated phase of 5 µm or more is 4.7 × 10⁻⁵/µm² or less, preferably 3.0 × 10⁻⁵/µm² or less, more preferably 2.7 × 10⁻⁵/µm² or less. If the presence density of the segregated phase of 5 µm or more is more than 4.7 × 10⁻⁵/µm², strength of the gadolinium wire rod is reduced, and cracking or the like is caused in various processings such as drawing (extending). On the other hand, when the presence density of the segregated phase of 5 µm or more is 4.7 × 10⁻⁵/µm² or less, the gadolinium wire rod can be high in strength and excellent in characteristics of various processings such as drawing (extending).

A method for producing the gadolinium wire rod of the second embodiment is not particularly limited, and a method is preferable as in the above first embodiment, which includes cutting out a round rod material having a predetermined diameter from a casting material including gadolinium as a main component, and repeating hot swaging at a reduction of area of 10 to 50% with the round rod material cut out being pre-heated so as to perform processing until the final reduction of area after hot swaging preferably reaches 90% or more, more preferably 95% or more, further preferably 97% or more. The pre-heating temperature here is preferably 400°C or more, more preferably 500°C or more, further preferably 600°C or more. Also in the second embodiment, it is considered that such repeated hot swaging can allow a phase containing a fluorine atom and/or a chlorine atom in large amounts and included in a wire rod including gadolinium as a main component to become finer. Herein, although hot swaging is exemplified in the second embodiment, hot-processing is not particularly limited to hot swaging, and any method including other hot-processing, for example, casting, rolling or extrusion can be used as long as the phase containing a fluorine atom and/or a chlorine atom in large amounts can become suitably finer.

The gadolinium wire rod of the second embodiment, thus obtained, preferably has a wire diameter of 2 to 10 mm.

In the second embodiment, the gadolinium wire rod of the second embodiment, thus obtained, may be drawn (extended) using a die or the like, to provide a drawn wire rod. In particular, the gadolinium wire rod of the second embodiment is controlled so that the presence density of the segregated phase of 5 µm or more is 4.7 × 10⁻⁵/µm² or less, and therefore is high in strength and excellent in characteristics of processings such as drawing (extending) and can be thus drawn (extended) to suitably provide a drawn wire rod. In this case, the drawn wire rod obtained is also controlled so that the presence density of a segregated phase containing fluorine atom and/or chlorine atom with a particle size of 5 µm or more is 4.7 × 10⁻⁵/µm² or less, preferably 3.0 × 10⁻⁵/µm² or less, more preferably 2.7 × 10⁻⁵/µm² or less, and therefore is again high in strength and excellent in processability.

The drawn wire rod of the second embodiment thus obtained is prepared using the gadolinium wire rod of the second embodiment, and therefore the wire diameter thereof can be preferably as fine as 0.1 to 1.0 mm, more preferably 0.1 to 0.5 mm. Thus the drawn wire rod is not only high in strength and excellent in processability, but also relatively high in surface area. Therefore, when used as the magnetic refrigeration material in the magnetic refrigeration technology utilizing the magnetocaloric effect, the drawn wire rod of the second embodiment is high in heat-exchange efficiency with the refrigerant, and thus is suitable as the magnetic refrigeration material.

Herein, the gadolinium wire rod of the second embodiment may be a mode where the number of segregated phases of 5 µm or more present in the segregated phase containing fluorine atom and/or chlorine atom in the visual field range of 256 µm × 166 µm is controlled to be 2 or less, instead of the presence density of the segregated phase of 5 µm or more being within the above range, or in addition to the presence density of the segregated phase of 5 µm or more being within the above range.

### <<Metal-covered gadolinium wire rod>>

A metal-covered gadolinium wire rod according to the present embodiment includes a clad layer including, as a main component, a metal other than gadolinium, the clad layer being formed on the outer periphery of the gadolinium wire rod according to the first embodiment or the gadolinium wire rod according to the second embodiment described above.

According to the metal-covered gadolinium wire rod according to the present embodiment, a clad layer including, as a main component, a metal other than gadolinium can be formed on the outer periphery of the gadolinium wire rod according to the first embodiment or the gadolinium wire rod according to the second embodiment, thereby allowing processability into a drawn wire rod to be more enhanced. In particular, in the case of drawing (extending) with a die or the like, a metal hardly sticking to the die can be selected as the metal other than gadolinium, for formation of the clad layer, to thereby properly prevent the occurrence of sticking to the die or the like in drawing, thereby allowing processability into a drawn wire rod to be enhanced.

The material for formation of the clad layer may be one including, as a main component, a metal other than gadolinium and is preferably, but not particularly limited to, copper, aluminum, nickel and/or an alloy thereof, more preferably copper or a copper alloy in view of satisfying drawability, corrosion resistance and thermal conductivity in a well-balanced manner. In particular, thermal conductivity is important in order that the amount of cold energy generated by a gadolinium wire as a core is properly transferred to the surface of the metal-covered gadolinium wire rod.

In order to complement thermal conductivity of the clad layer, the clad layer may contain a carbon-based material such as a carbon nanotube. The carbon nanotube may be a carbon-based material where a graphene sheet has a tubular shape, and may be any of a single-walled nanotube (SWNT) and a multi-walled nanotube (MWNT).

The metal-covered gadolinium wire rod of the present embodiment can be obtained by covering the outer periphery of the gadolinium wire rod according to the first embodiment or the gadolinium wire rod according to the second embodiment described above with the clad layer including, as a main component, a metal other than gadolinium.

Specifically, the gadolinium wire rod according to the first embodiment or the gadolinium wire rod according to the second embodiment, serving as a core, obtained by the above method (hereinafter, appropriately referred to as "gadolinium core") can be inserted into a tubular member made of a metal material for formation of the clad layer, thereby providing a metal-covered gadolinium wire rod where the outer periphery of the gadolinium core is covered with the clad layer including, as a main component, a metal other than gadolinium. In the present embodiment, after the gadolinium core is inserted into the tubular member made of a metal material for formation of the clad layer, the core and the tubular member may be subjected to a treatment for integration. When the gadolinium core is inserted into the tubular member, it is preferable to insert the gadolinium core into the tubular member after a treatment for removal of each of an oxide film on the surface of the gadolinium core and an oxide film on the inner wall surface of the tubular member. The method for removing such oxide films is not particularly limited, and examples thereof include a method for removal by washing with an acid or an alkali and a method for removal by mechanical polishing.

In the present embodiment, the metal-covered gadolinium wire rod thus obtained can be drawn (extended) with a die or the like, thereby providing a drawn wire rod having a desired wire diameter. In particular, a metal hardly sticking to the die can be selected as the metal other than gadolinium, for formation of the clad layer, to thereby properly prevent the occurrence of sticking to the die or the like in drawing, thereby allowing excellent processability to be realized. Furthermore, the metal-covered gadolinium wire rod according to the present embodiment is properly enhanced in strength thereof because the gadolinium wire rod according to the first embodiment or the gadolinium wire rod according to the second embodiment described above is used as a core and a fine structure of the segregated phase containing fluorine atom and/or chlorine atom is a structure described in the first embodiment and the second embodiment.

Therefore, according to the present embodiment, a drawn wire rod can be obtained which is obtained by drawing the metal-covered gadolinium wire rod and whose wire diameter is preferably as fine as 0.1 to 1.0 mm, more preferably 0.1 to 0.5 mm, and thus, when used as the magnetic refrigeration material in the magnetic refrigeration technology utilizing the magnetocaloric effect, the drawn wire rod is high in heat-exchange efficiency with the refrigerant and can be suitably used as the magnetic refrigeration material.

In the present embodiment, in such a drawn wire rod drawn (extended) so as to have a desired wire diameter, the area occupied by the gadolinium wire in the cross section perpendicular to the longitudinal direction is preferably 55 to 99%, more preferably 60 to 95%, further preferably 65 to 95%, particularly preferably 75 to 95%, based on the area of the cross section.

The metal-covered gadolinium wire is smaller in the change in the surface temperature during application of a predetermined magnetic field than a gadolinium wire covered with no metal. It has been then found that the change in the surface temperature of the metal-covered gadolinium wire is smaller in proportion to a decrease in the area occupied by the gadolinium wire in the cross section perpendicular to the longitudinal direction of the metal-covered gadolinium wire, namely, an increase in the area occupied by the clad layer therein. Therefore, the proportion of the area occupied by the gadolinium wire in the cross sectional area is preferably within the above range in order that a sufficient change in the surface temperature (the amount of cold energy) as the metal-covered gadolinium wire rod is exhibited, and thus, when the metal-covered gadolinium wire rod is used as the magnetic refrigeration material in the magnetic refrigeration technology utilizing the magnetocaloric effect, it exerts a sufficient effect of processability by formation of the clad layer while having an enhanced heat-exchange efficiency with the refrigerant. Herein, a sufficient change in the surface temperature (the amount of cold energy) exhibited as the metal-covered gadolinium wire rod is preferably 50% or more relative to the change in the surface temperature of the gadolinium wire covered with no metal.

In view of being used in the magnetic refrigeration technology utilizing magnetocaloric effect, the metal-covered gadolinium wire rod of the present embodiment is preferably one where no gadolinium core is exposed even at both ends thereof, and therefore the both ends are preferably sealed by plating with the metal material used for formation of the clad layer, or sealed by a resin material or the like. If the gadolinium core is exposed at the both ends, the gadolinium core may be corroded depending on the difference in ionization tendency between the gadolinium core and the clad layer, and thus the both ends can be sealed to thereby properly prevent such a failure.

### <<Magnetic refrigerator>>

Next, the gadolinium wire rod according to each of the first embodiment and the second embodiment, and a magnetic refrigerator 1 to which the metal-covered gadolinium wire rod is applied will be described.

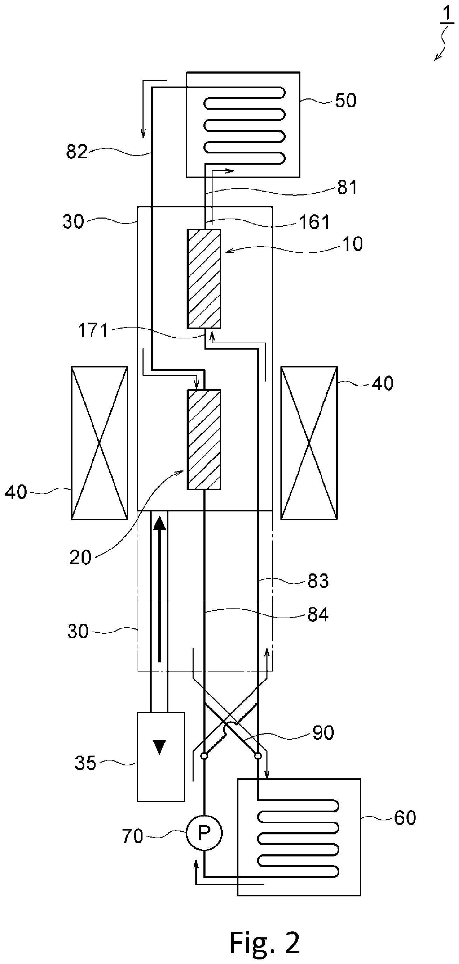

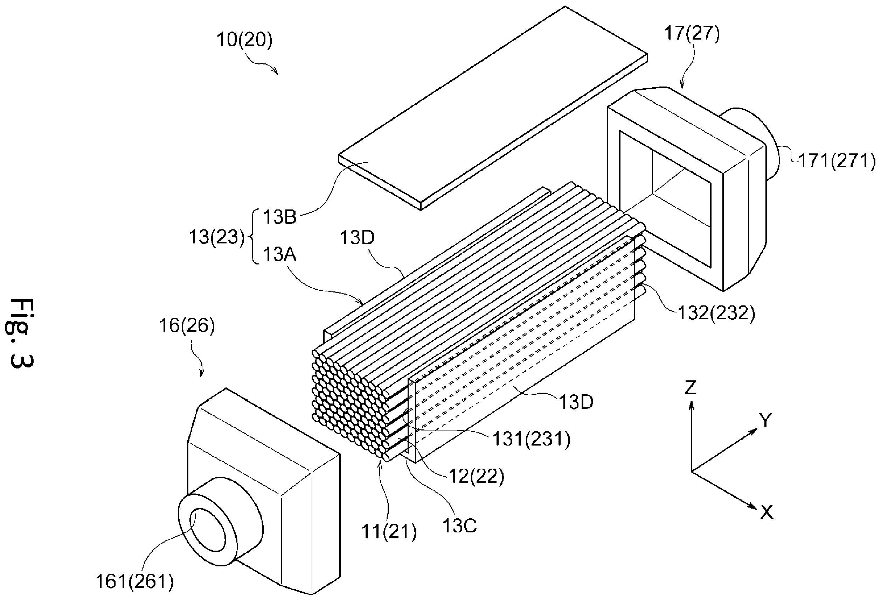

Figure 2 is a view illustrating the entire configuration of a magnetic refrigerator 1 including first and second MCM heat exchangers 10 and 20 according to an embodiment of the present invention. Figure 3 is an exploded perspective view illustrating the configuration of the first and second MCM heat exchangers 10 and 20 according to the present embodiment.

The magnetic refrigerator 1 in the present embodiment is a heat pump apparatus utilizing the magnetocaloric effect, and includes first and second MCM heat exchangers 10 and 20, a piston 30, a permanent magnet 40, a low-temperature heat exchanger 50, a high-temperature heat exchanger 60, a pump 70, pipes 81 to 84 and a changeover valve 90, as illustrated in Figure 2.

As illustrated in Figure 3, the first MCM heat exchanger 10 includes an aggregate 11 including a plurality of linear objects 12, a case 13 through which the aggregate 11 is inserted, and a first adapter 16 and a second adapter 17 connected to the case 13. Herein, the first MCM heat exchanger 10 and the second MCM heat exchanger 20 are similarly configured, therefore only the configuration of the first MCM heat exchanger 10 is described below, and the description about the configuration of the second MCM heat exchanger 20 is omitted and the description about the configuration of the first MCM heat exchanger 10 is incorporated thereto. In Figure 3, the first MCM heat exchanger 10 is illustrated, and the corresponding symbols with respect to the second MCM heat exchanger 20 are merely noted in brackets and illustration is omitted.

The linear objects 12 are each a wire rod which is formed from a magnetocaloric effect material exerting the magnetocaloric effect (MCM: Magnetocaloric Effect Material) and which has a circular cross-sectional shape. When a magnetic field is applied to the linear objects 12 formed from MCM, electron spins are aligned to result in a decrease in magnetic entropy, and the linear objects 12 generate heat to provide temperature rise. On the other hand, when the magnetic field is removed from the linear objects 12, electron spins are disordered to result in an increase in magnetic entropy, and the linear objects 12 absorb heat to provide temperature drop.

In the present embodiment, at least one selected from the gadolinium wire rods according to the first embodiment and the second embodiment described above, and the metal-covered gadolinium wire rod is used in the linear objects 12.

The aggregate 11 is constituted of a bundle of the plurality of linear objects 12 mutually arranged in parallel. The side surfaces of adjacent linear objects 12 are in contact with each other, and a flow path is consequently formed therebetween.

The aggregate 11 of the linear objects 12 is inserted through the case 13. As illustrated in Figure 3, the case 13 is formed in a rectangular tubular manner. A first opening 131 and a second opening 132 are formed at one end and another end in the axis direction of the case 13, respectively.

The case 13 includes a linear object-receiving portion 13A whose cross sectional shape orthogonal to the axis direction is a U-shape, and a rectangular plate-shaped lid portion 13B. The linear object-receiving portion 13A includes a bottom portion 13C forming the bottom portion of the case 13, and a pair of wall portions 13D forming the side wall portions located at both sides of the case 13. The end in the width direction of the lid portion 13B is secured to the upper end of the wall portion 13D, thereby allowing the upper portion of the linear object-receiving portion 13A to be closed by the lid portion 13B.

As illustrated in Figure 3, the first adapter 16 is connected to the first opening 131 of the case 13, and the second adapter 17 is connected to the second opening 132 thereof. The first adapter 16 has a first connection opening 161 at a location opposite to a location at which the first adapter 16 is to be connected to the first opening 131. The first connection opening 161 is communicated with the low-temperature heat exchanger 50 via a first low-temperature pipe 81. The second adapter 17 also has a second connection opening 171 at a location opposite to a location at which the second adapter 17 is to be connected to the second opening 132. The second connection opening 171 is communicated with the high-temperature heat exchanger 60 via a first high-temperature pipe 83.

For example, as illustrated in Figure 2, when an air conditioning apparatus using the magnetic refrigerator 1 of the present embodiment serves as a cooling apparatus, heat exchange is performed between the low-temperature heat exchanger 50 and air in a room to thereby cool the room, and also heat exchange is performed between the high-temperature heat exchanger 60 and air outside the room to thereby release heat outside the room. On the other hand, when the air conditioning apparatus serves as a heating apparatus, heat exchange is performed between the high-temperature heat exchanger 60 and air in a room to thereby warm the room, and also heat exchange is performed between the low-temperature heat exchanger 50 and air outside the room to thereby absorb heat from the outside of the room.

As described above, a circulation path including the four MCM heat exchangers 10, 20, 50 and 60 is formed by the two low-temperature pipes 81 and 82 and the two high-temperature pipes 83 and 84, and a liquid medium is pumped into the circulation path by the pump 70. Specific examples of the liquid medium can include liquids such as water, an antifreeze liquid, an ethanol liquid or a mixture thereof.

The two MCM heat exchangers 10 and 20 are received in the piston 30. The piston 30 can reciprocate between a pair of permanent magnets 40 by an actuator 35. Specifically, the piston 30 can move from a position indicated in Figure 2 to a position indicated by a dashed-dotted line in Figure 2, and reciprocates between such points.

The changeover valve 90 is provided on each of the first high-temperature pipe 83 and the second high-temperature pipe 84. The changeover valve 90 interlocks with the movement of the piston 30, to switch a destination to which the liquid medium is to be fed by the pump 70, to the first MCM heat exchanger 10 or the second MCM heat exchanger 20, and also switch a destination to which the high-temperature heat exchanger 60 is to be connected, to the second MCM heat exchanger 20 or the first MCM heat exchanger 10.

The piston 30 is then moved from a position indicated by a dashed-dotted line in Figure 2 to a position indicated in Figure 2, thereby demagnetizing the linear objects 12 of the first MCM heat exchanger 10 to result in temperature drop, and on the other hand, magnetizing the linear objects 22 of the second MCM heat exchanger 20 to result in temperature rise.

Simultaneously, a pathway (pathway indicated by an arrow in Figure 2) including the following in the following order: pump 70 → first high-temperature pipe 83 → first MCM heat exchanger 10 → first low-temperature pipe 81 → low-temperature heat exchanger 50 → second low-temperature pipe 82 → second MCM heat exchanger 20 → second high-temperature pipe 84 → high-temperature heat exchanger 60 → pump 70; is formed by the changeover valve 90.

Therefore, the liquid medium is cooled by the linear objects 12 of the first MCM heat exchanger 10, having a decreased temperature by demagnetizing, and the liquid medium is fed to the low-temperature heat exchanger 50 to cool the low-temperature heat exchanger 50. On the other hand, the liquid medium is heated by the linear objects 22 of the second MCM heat exchanger 20, having an increased temperature by magnetizing, and the liquid medium is fed to the high-temperature heat exchanger 60 to heat the high-temperature heat exchanger 60.

Next, the piston 30 is moved from a position indicated in Figure 2 to a position indicated by a dashed-dotted line in Figure 2, thereby magnetizing the linear objects 12 of the first MCM heat exchanger 10 to result in temperature rise, and on the other hand, demagnetizing the linear objects 22 of the second MCM heat exchanger 20 to result in temperature drop. Simultaneously, the same pathway as described above is formed by the changeover valve 90, thereby cooling the low-temperature heat exchanger 50 and heating the high-temperature heat exchanger 60.

The piston 30 then reciprocates repeatedly, and a magnetic field is repeatedly applied to and removed from the linear objects 12 and 22 of the first and second MCM heat exchangers 10 and 20, thereby continuously cooling the low-temperature heat exchanger 50 and heating the high-temperature heat exchanger 60.

### Examples

Hereinafter, the present invention will be more specifically described with reference to Examples, but the present invention is not limited to these Examples.

### <Example 1>

### <Production of gadolinium wire rod>

A round gadolinium rod material of ϕ12 mm × 120 mm was cut out from a commercially available gadolinium casting material (including gadolinium as a main component). The round rod material which was cut out was subjected to hot swaging at a reduction of area of 20% ten times repeatedly with being pre-heated to 500°C, thereby producing a gadolinium wire rod having a reduction of area of 95.3% relative to the round rod material. Herein, the wire diameter of the resulting gadolinium wire rod was 2.6 mm.

### <Measurement of segregated phase containing fluorine atom and/or chlorine atom with respect to gadolinium wire rod after hot swaging>

The gadolinium wire rod obtained above was cut at any transverse section (cross section perpendicular to the wire rod longitudinal direction), and a cut portion was embedded in an epoxy resin and mechanically polished to thereby expose a cross section, thereby producing a measurement sample. A reflection electron image was taken by a scanning electron microscope (product name "JSM-5610LV", manufactured by JEOL Ltd.) at any five locations of the resulting measurement sample. The conditions here were as follows: output: 15 kV, operating distance: 20 mm, spot size: 30 mm and magnification: 500-fold. The resulting five reflection electron images were then acquired as an image having a visual field of 1280 × 960 pixels at a resolution of 5 pixels/µm. The resulting reflection electron image is illustrated in Figure 1(A).

In the resulting reflection electron image, a visual field of 1280 × 830 pixels = 256 µm × 166 µm, where a label region was removed, of an image size of 1280 × 960 pixels was defined as an object to be analyzed, and subjected to image analysis using image analysis software (product name "Image J 1.49 ver.", manufactured by National Institute of Health). Specifically, Image type was read as 8 bit in the image analysis software, and analysis was performed at a scale setting of 5 pixels/µm. Herein, the lower limit and the upper limit of the grayscale divided to 256 tones were set to 0 and 30, respectively, with respect to the threshold in the setting of the image analysis software, and thus binarization processing was performed. According to the present Example, such a threshold could be set to thereby properly detect the segregated phase containing fluorine atom and/or chlorine atom. The resulting reflection electron image after binarization processing is illustrated in Figure 1(B). In Figure 1(B), a black portion corresponds to a portion where the segregated phase containing fluorine atom and/or chlorine atom is present.

Next, the resulting reflection electron image after binarization processing was subjected to detection using an Analyze function of the image analysis software, the segregated phase containing fluorine atom and/or chlorine atom detected was approximated to a circle having the same area, based on the number of pixels on the image, to thereby determine a circle equivalent diameter, and the circle equivalent diameter was defined as the particle size of the segregated phase containing fluorine atom and/or chlorine atom. Herein, the size of Analyze particles in Analyze function of the image analysis software was set to 1-Infinity, and a fine particle having a particle size of 1 µm or less was excluded from the measurement subjects from the viewpoint that any measurement error and any influence of a heterogeneous phase other than the segregated phase containing fluorine atom and/or chlorine atom were removed. Furthermore, exclude on edge as an option of the image analysis software was used in image analysis, and any particle striding over the edge of the reflection electron image was also excluded from the measurement subjects.

The reflection electron images obtained at any five locations were each subjected to the above measurement, and the average particle size of the segregated phase containing fluorine atom and/or chlorine atom was determined by determining the arithmetic average value from the resulting particle size of the segregated phase containing fluorine atom and/or chlorine atom. Herein, the respective average particle sizes in the reflection electron images obtained at the five locations in Example 1 were 2.0 µm, 2.0 µm, 1.7 µm, 1.7 µm and 1.9 µm, and the average value with respect to all of the reflection electron images obtained at the five locations was 1.9 µm.

In addition to the above, the reflection electron images obtained at any five locations were also subjected to the above measurement, and the number of particles having a particle size of 5 µm or more was counted based on the particle size of the resulting segregated phase containing fluorine atom and/or chlorine atom, thereby determining the number of segregated phase containing fluorine atom and/or chlorine atom(s) with a particle size of 5 µm or more, present in the visual field range of 256 µm × 166 µm. The value obtained by dividing the total number (total number in measurement at five locations) of segregated phase containing fluorine atom and/or chlorine atom(s) with a particle size of 5 µm or more by 256 µm × 166 µm × 5 being the measurement range, namely, the presence density of the segregated phase of 5 µm or more (the presence density of a segregated phase containing fluorine atom and/or chlorine atom with a particle size of 5 µm or more) was 2.5 × 10⁻⁵/µm². Herein, the segregated phase containing fluorine atom and/or chlorine atom detected by the above method in the present Example was subjected to componential analysis by EDS (Energy Dispersive Spectroscopy) analysis, and as a result, the phase was confirmed to be a fluorine atom- and/or chlorine atom-containing phase also by EDS analysis (the same result was also confirmed as in Example 2 and Comparative Examples 1 to 3 described below.).

### <Production of drawn wire rod>

The gadolinium wire rod after hot swaging (wire rod before drawing), obtained above, was then repeatedly extended using a die with the target wire diameter after drawing being set to 0.1 mm, thereby providing a drawn wire rod having a wire diameter of 0.1 mm.

### <Measurement of segregated phase containing fluorine atom and/or chlorine atom with respect to drawn wire rod>

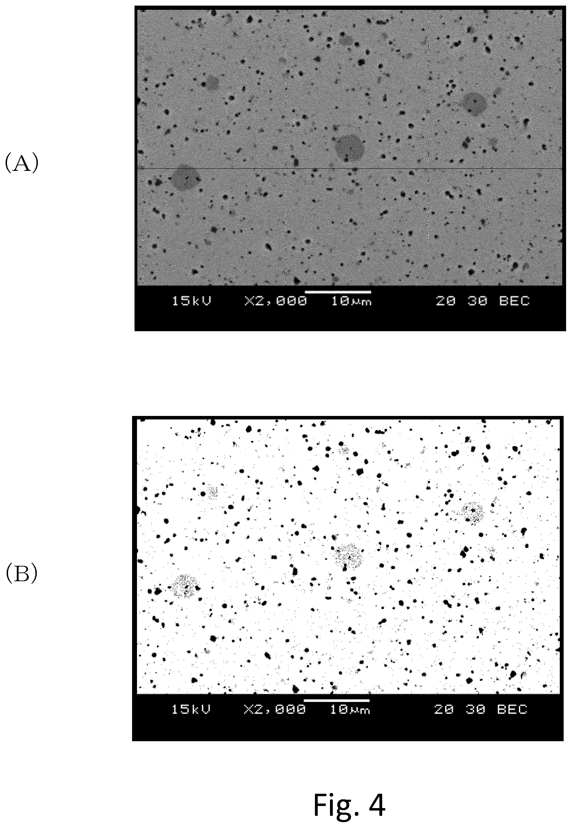

The resulting drawn wire rod was then subjected to measurement of the segregated phase containing fluorine atom and/or chlorine atom (namely, measurement of each of the average particle size of the segregated phase and the presence density of the segregated phase of 5 µm or more) in the same manner as described above. The resulting drawn wire rod, however, was small in wire diameter and the cross-sectional area thereof was smaller than the visual field range of 256 µm × 166 µm, and therefore the drawn wire rod was cut at any five locations and all of any five cross sections perpendicular to the wire rod longitudinal direction were subjected to the measurement, to thereby providing the measurement results. Figure 4(A) and Figure 4(B) illustrate a reflection electron image of the drawn wire rod of Example 1 and a reflection electron image of the drawn wire rod after binarization processing of Example 1, respectively.

### <Example 2>

### <Production of gadolinium wire rod>

A gadolinium wire rod having a reduction of area of 97.2% relative to the round rod material was produced except that the number of times of hot swaging at a reduction of area of 20% was changed to 12. Herein, the wire diameter of the resulting gadolinium wire rod was 2 mm.

### <Measurement of segregated phase containing fluorine atom and/or chlorine atom with respect to gadolinium wire rod after hot swaging>

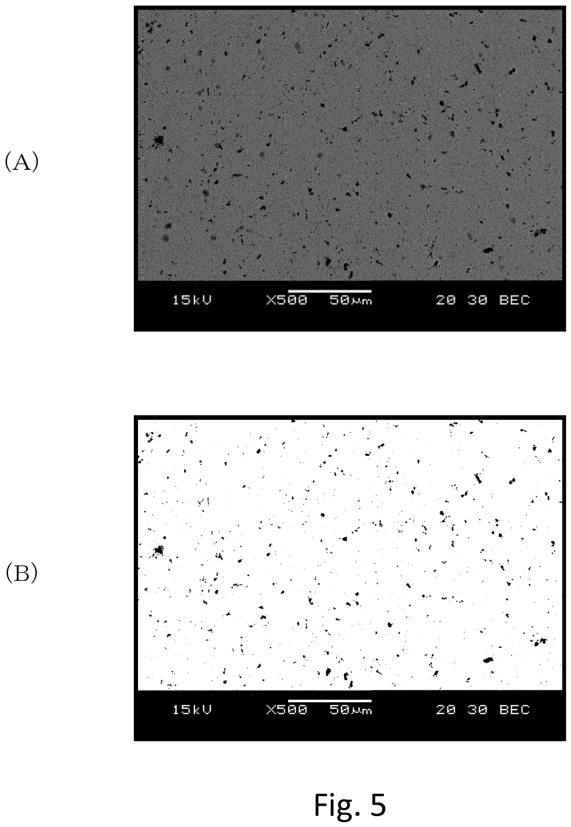

The resulting gadolinium wire rod was then subjected to measurement of the segregated phase containing fluorine atom and/or chlorine atom in the same manner as in Example 1 above. As a result, the respective average particle sizes in the reflection electron images obtained at the five locations in Example 2 were 1.7 µm, 1.8 µm, 1.9 µm, 1.9 µm and 1.8 µm, and the average value in all of the reflection electron images obtained at the five locations was 1.8 µm. In addition, the presence density of the segregated phase of 5 µm or more was 2.0 × 10⁻⁵/µm². Figure 5(A) and Figure 5(B) illustrate a reflection electron image of the gadolinium wire rod of Example 2 and a reflection electron image after binarization processing of Example 2, respectively.

### <Production of drawn wire rod>

The gadolinium wire rod after hot swaging (wire rod before drawing), obtained above, was then repeatedly extended using a die with the target wire diameter after drawing being set to 0.1 mm, thereby providing a drawn wire rod having a wire diameter of 0.1 mm.

### <Measurement of segregated phase containing fluorine atom and/or chlorine atom with respect to drawn wire rod>

The resulting drawn wire rod was then subjected to measurement of the segregated phase containing fluorine atom and/or chlorine atom (namely, measurement of each of the average particle size of the segregated phase and the presence density of the segregated phase of 5 µm or more) in the same manner as described above. The resulting drawn wire rod, however, was small in wire diameter and the cross-sectional area thereof was smaller than the visual field range of 256 µm × 166 µm, and therefore the drawn wire rod was cut at any five locations and all of any five cross sections perpendicular to the wire rod longitudinal direction were subjected to the measurement, to thereby providing the measurement results.

### <Comparative Example 1>

### <Production of gadolinium wire rod>

A round gadolinium rod material of ϕ12 mm × 120 mm, cut out from a commercially available gadolinium casting material, was used as a gadolinium wire rod as it was in Comparative Example 1.

### <Measurement of segregated phase containing fluorine atom and/or chlorine atom>

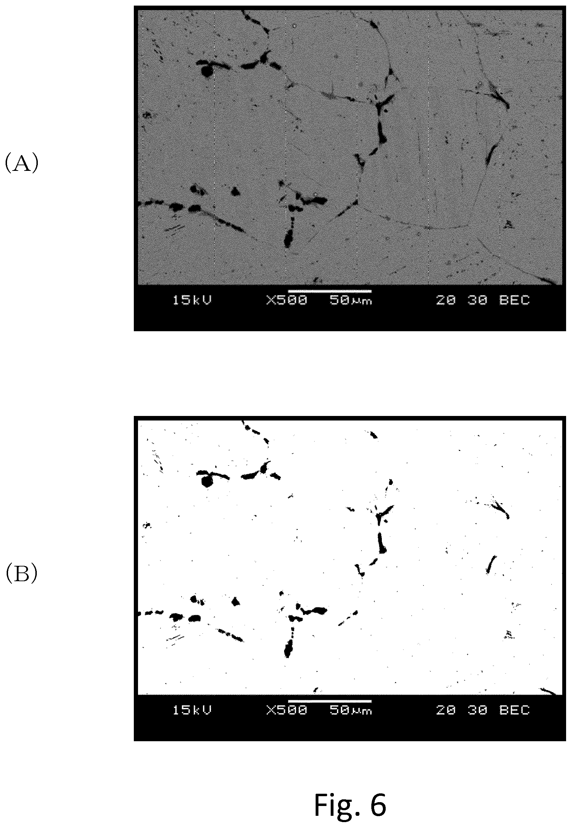

The resulting gadolinium wire rod was then subjected to measurement of the segregated phase containing fluorine atom and/or chlorine atom in the same manner as in Example 1 described above. As a result, the respective average particle sizes in the reflection electron images obtained at the five locations in Comparative Example 1 were 3.2 µm, 3.3 µm, 2.9 µm, 3.1 µm and 2.9 µm, and the average value in all of the reflection electron images obtained at the five locations was 3.1 µm. In addition, the presence density of the segregated phase of 5 µm or more was 2.0 × 10⁻⁴/µm². Figure 6(A) and Figure 6(B) illustrate a reflection electron image of the gadolinium wire rod of Comparative Example 1 and a reflection electron image after binarization processing of Comparative Example 1, respectively.

### <Production of drawn wire rod>

The gadolinium wire rod obtained above (wire rod before drawing) was then repeatedly extended using a die with the target wire diameter after drawing being set to 0.1 mm, and, when a drawn wire having a wire diameter of 9.6 mm was obtained, the wire was broken successively five or more times even if further drawn, and thus a wire diameter of 9.6 mm corresponded to the drawing limit and there could not be obtained any drawn wire having a wire diameter smaller than the drawing limit.

### <Measurement of segregated phase containing fluorine atom and/or chlorine atom with respect to drawn wire rod>

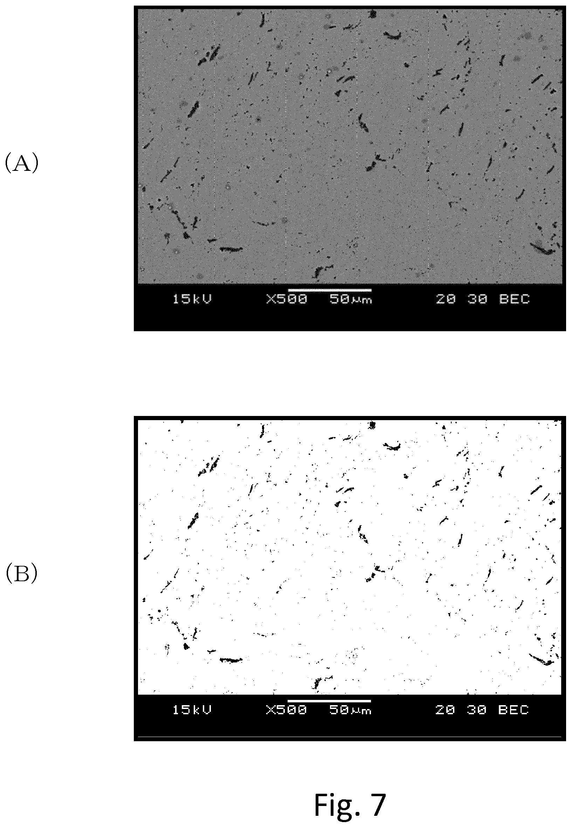

The resulting drawn wire rod was then subjected to measurement of the segregated phase containing fluorine atom and/or chlorine atom (namely, measurement of each of the average particle size of the segregated phase and the presence density of the segregated phase of 5 µm or more) in the same manner as described above. Figure 7(A) and Figure 7(B) illustrate a reflection electron image of the drawn wire rod of Comparative Example 1 and a reflection electron image of the drawn wire rod after binarization processing of Comparative Example 1, respectively.

### <Comparative Example 2>

### <Production of gadolinium wire rod>

A gadolinium wire rod having a reduction of area of 73.8% relative to the round rod material was produced except that the number of times of hot swaging at a reduction of area of 20% was changed to 5. Herein, the wire diameter of the resulting gadolinium wire rod was 6.15 mm.

### <Measurement of segregated phase containing fluorine atom and/or chlorine atom with respect to gadolinium wire rod after hot swaging>

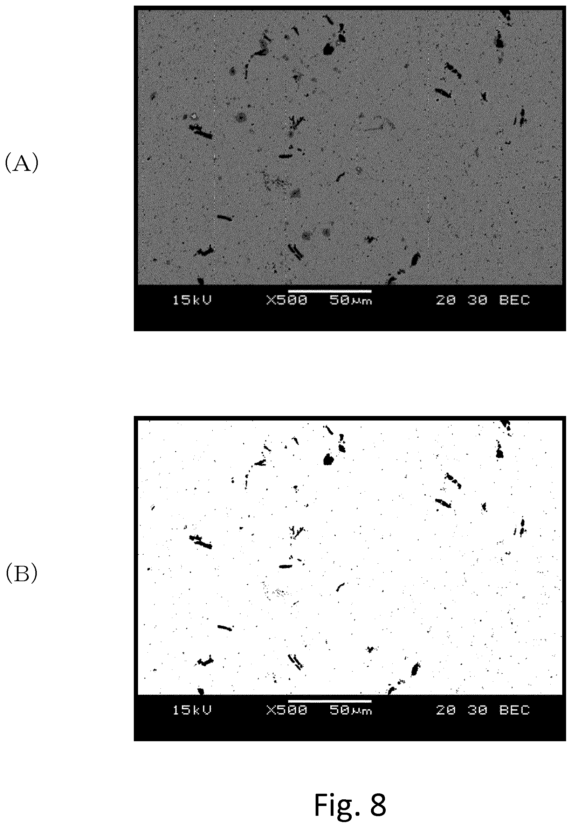

The resulting gadolinium wire rod was then subjected to measurement of the segregated phase containing fluorine atom and/or chlorine atom in the same manner as in Example 1 described above. As a result, the respective average particle sizes in the reflection electron images obtained at the five locations in Comparative Example 2 were 2.7 µm, 2.3 µm, 2.4 µm, 2.5 µm and 2.5 µm, and the average value in all of the reflection electron images obtained at the five locations was 2.5 µm. In addition, the presence density of the segregated phase of 5 µm or more was 1.8 × 10⁻⁴/µm². Figure 8(A) and Figure 8(B) illustrate a reflection electron image of the gadolinium wire rod of Comparative Example 2 and a reflection electron image after binarization processing of Comparative Example 2, respectively.

### <Production of drawn wire rod>

The gadolinium wire rod after hot swaging (wire rod before drawing), obtained above, was then repeatedly extended using a die with the target wire diameter after drawing being set to 0.1 mm, and, when a drawn wire having a wire diameter of 3.88 mm was obtained, the wire was broken successively five or more times even if further drawn, and thus a wire diameter of 3.88 mm corresponded to the drawing limit and there could not be obtained any drawn wire having a wire diameter smaller than the drawing limit.

### <Measurement of segregated phase containing fluorine atom and/or chlorine atom with respect to drawn wire rod>

The resulting drawn wire rod was then subjected to measurement of the segregated phase containing fluorine atom and/or chlorine atom (namely, measurement of each of the average particle size of the segregated phase and the presence density of the segregated phase of 5 µm or more) in the same manner as described above.

### <Comparative Example 3>

### <Production of gadolinium wire rod>

A gadolinium wire rod having a reduction of area of 88.6% relative to the round rod material was produced except that the number of times of hot swaging at a reduction of area of 20% was changed to 8. Herein, the wire diameter of the resulting gadolinium wire rod was 4.05 mm.

### <Measurement of segregated phase containing fluorine atom and/or chlorine atom with respect to gadolinium wire rod after hot swaging>

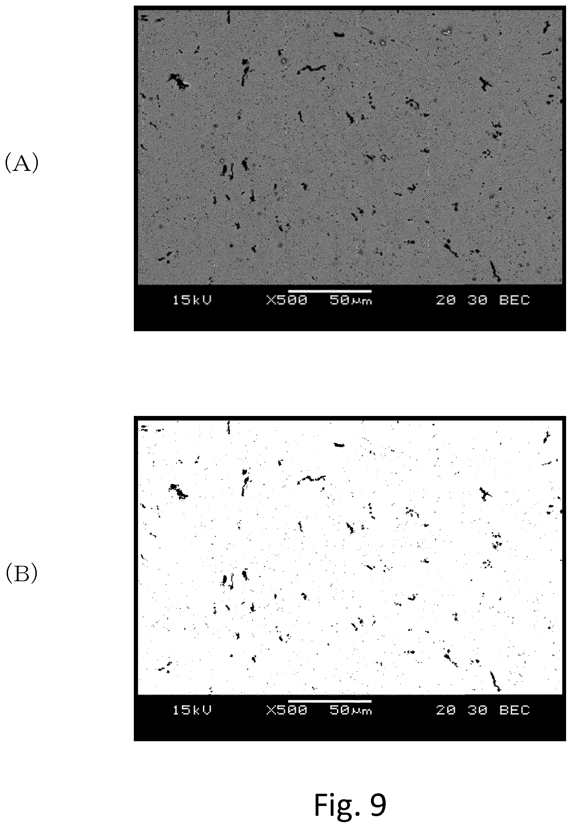

The resulting gadolinium wire rod was then subjected to measurement of the segregated phase containing fluorine atom and/or chlorine atom in the same manner as in Example 1 described above. As a result, the respective average particle sizes in the reflection electron images obtained at the five locations in Comparative Example 3 were 2.1 µm, 2.1 µm, 2.2 µm, 2.2 µm and 2.3 µm, and the average value in all of the reflection electron images obtained at the five locations was 2.2 µm. In addition, the presence density of the segregated phase of 5 µm or more was 5.5 × 10⁻⁵/µm². Figure 9(A) and Figure 9(B) illustrate a reflection electron image of the gadolinium wire rod of Comparative Example 2 and a reflection electron image after binarization processing of Comparative Example 2, respectively.

### <Production of drawn wire rod>

The gadolinium wire rod after hot swaging (wire rod before drawing), obtained above, was then repeatedly extended using a die with the target wire diameter after drawing being set to 0.1 mm, and, when a drawn wire having a wire diameter of 1.81 mm was obtained, the wire was broken successively five or more times even if further drawn, and thus a wire diameter of 1.81 mm corresponded to the drawing limit and there could not be obtained any drawn wire having a wire diameter smaller than the drawing limit.

### <Measurement of segregated phase containing fluorine atom and/or chlorine atom with respect to drawn wire rod>

The resulting drawn wire rod was then subjected to measurement of the segregated phase containing fluorine atom and/or chlorine atom (namely, measurement of each of the average particle size of the segregated phase and the presence density of the segregated phase of 5 µm or more) in the same manner as described above.

### [Table 1]

**Table 1**

| | Wire rod after hot swaging^{*1)} | | Drawn wire rod | | Segregated phase containing fluorine atom and/or chlorine atom of wire rod after hot swagind^{*1)} | | Segregated phase containing fluorine atom and/or chlorine atom of drawn wire rod | |
|---|---|---|---|---|---|---|---|---|
| | Wire diameter [mm] | Reduction of area relative to casting material [%] | Drawn wire diameter (wire diameter at drawing limit) [mm] | Reduction of area relative to area of wire rod after hot swaging [%] | Average particle size [µm] | Presence density of segregated phase with a particle size of 5 µm or more [/µm²] | Average particle size [µm] | Presence density of segregated phase with a particle size of 5 µm or more [/µm²] |
| Example 1 | 2.6 | 95.3 | 0.1 | 99.9 | 1.9 | 2.5×10⁻⁵ | 1.5 | 0 |
| Example 2 | 2 | 97.2 | 0.1 | 99.8 | 1.8 | 2.0×10⁻⁵ | 1.5 | 0 |
| Comparative Example 1 | 12 | 0 | 9.6 | 36 | 3.1 | 2.0×10⁻⁴ | 2.2 | 9.0×10⁻⁵ |
| Comparative Example 2 | 6.15 | 73.8 | 3.88 | 60 | 2.5 | 1.8×10⁻⁴ | 2.3 | 9.5×10⁻⁵ |
| Comparative Example 3 | 4.05 | 88.6 | 1.81 | 80 | 2.2 | 5.5×10⁻⁵ | 2.2 | 3.0×10⁻⁵ |

| | | | | | | | | |
|---|---|---|---|---|---|---|---|---|
| ^{*1)} No hot swaging was made and the round rod material cut out from the casting material was used as it was in Comparative Example 1 | | | | | | | | |

### <Evaluation>

The results in Examples 1 and 2, and Comparative Examples 1 to 3 are collectively shown in Table 1. With respect to the wire diameter of the drawn wire rod in Table 1, drawing to a target wire diameter of 0.1 mm could be made and such a value was thus shown with respect to each of Examples 1 and 2, and on the other hand, the wire diameter corresponding to the drawing limit was shown with respect to each of Comparative Examples 1 to 3.

As shown in Table 1, when the average particle size of the segregated phase containing fluorine atom and/or chlorine atom and the presence density of the segregated phase of 5 µm or more (the presence density of a segregated phase containing fluorine atom and/or chlorine atom with a particle size of 5 µm or more) were within the predetermined ranges of the present invention, the gadolinium wire rod was high in strength and excellent in processability and thus could be drawn to a target wire diameter of 0.1 mm, thereby providing a drawn wire rod having a large surface area, and furthermore the resulting drawn wire rod also had any average particle size of the segregated phase containing fluorine atom and/or chlorine atom and any presence density of the segregated phase of 5 µm or more which were within the predetermined ranges of the present invention, and was high in strength and excellent in processability (Examples 1 and 2).

On the other hand, the gadolinium wire rod having any average particle size of the segregated phase containing fluorine atom and/or chlorine atom and any presence density of the segregated phase of 5 µm or more (the presence density of a segregated phase containing fluorine atom and/or chlorine atom with a particle size of 5 µm or more) which were out of the predetermined ranges of the present invention could not be drawn so as to have a target wire diameter after drawing, being 0.1 mm, and was poor in strength and processability, and the resulting drawn wire rod also had any average particle size of the segregated phase containing fluorine atom and/or chlorine atom and any presence density of the segregated phase of 5 µm or more which were out of the predetermined ranges of the present invention, and was poor in strength and processability (Comparative Examples 1 to 3).

### <Example 3>

The gadolinium wire having a wire diameter after hot swaging, of 2.6 mm, obtained in Example 1 above, was used as a core, and was inserted into a copper tube made of pure copper of C1220, having an inner diameter of 2.7 mm and an outer diameter of 3.5 mm, thereby providing a metal-covered gadolinium wire rod. Herein, any oxide film was removed in advance from the surface of the gadolinium wire by mechanical polishing and from the inner surface of the copper tube by washing with nitric acid.

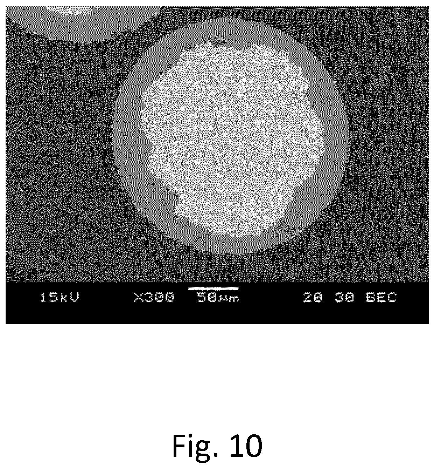

The resulting metal-covered gadolinium wire rod was then repeatedly extended using a die, with the target wire diameter after drawing being set to 0.25 mm, under a condition where the reduction of area per extending was 20%, thereby providing a drawn wire rod having a wire diameter of 0.25 mm. A cross section of the resulting drawn wire rod was then subjected to reflection electron image measurement and the resulting reflection electron image was used to determine the proportion of the gadolinium wire portion in the cross section of the drawn wire rod, and it was thus found that the proportion was 58%. A reflection electron image of the cross section of the drawn wire rod obtained in Example 3 is illustrated in Figure 10.

The resulting drawn wire rod was subjected to measurement of the segregated phase containing fluorine atom and/or chlorine atom (namely, measurement of each of the average particle size of the segregated phase and the presence density of the segregated phase of 5 µm or more) in the same manner as described above. The resulting drawn wire rod, however, was small in wire diameter and the cross-sectional area thereof was smaller than the visual field range of 256 µm × 166 µm, and therefore the drawn wire rod was cut at any five locations and all of any five cross sections perpendicular to the wire rod longitudinal direction were subjected to the measurement, to thereby providing the measurement results. As the measurement results, the average particle size of the segregated phase was 1.5 µm and the presence density of the segregated phase of 5 µm or more was 0/µm².

Next, the change in the surface temperature in application of a predetermined magnetic field to the resulting drawn wire rod was measured by thermography and the change in the surface temperature, obtained as the result of measurement, was determined as the value obtained under the assumption that the change in the surface temperature of the wire of pure gadolinium, obtained in Example 1, was 100%, and it was thus found that the amount of change in the surface temperature in Example 3 was 55%.

### <Example 4>

A metal-covered gadolinium wire rod was obtained in the same manner as in Example 3 except that the copper tube used was a copper tube made of pure copper of C1220, having an inner diameter of 2.7 mm and an outer diameter of 3.2 mm. The resulting metal-covered gadolinium wire rod was then repeatedly extended using a die, with the target wire diameter after drawing being set to 0.25 mm, under a condition where the reduction of area per extending was 20%, thereby providing a drawn wire rod having a wire diameter of 0.25 mm.

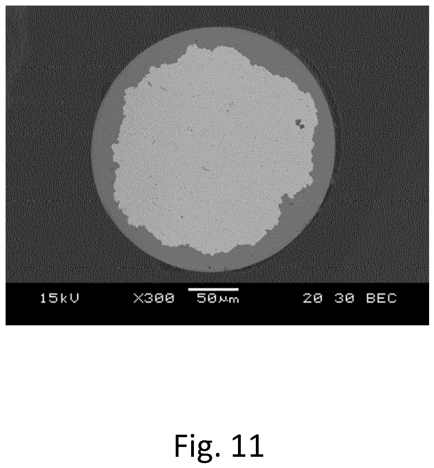

The resulting drawn wire rod was evaluated in the same manner as in Example 3, and it was found that the proportion of the gadolinium wire portion in the cross section of the drawn wire rod was 68% and the amount of change in the surface temperature under the assumption that the change in the surface temperature of the pure gadolinium wire was 100% was 69%. A reflection electron image of the cross section of the drawn wire rod obtained in Example 4 is illustrated in Figure 11.

The resulting drawn wire rod was subjected to measurement of the segregated phase containing fluorine atom and/or chlorine atom (namely, measurement of each of the average particle size of the segregated phase and the presence density of the segregated phase of 5 µm or more) in the same manner as described above. The resulting drawn wire rod, however, was small in wire diameter and the cross-sectional area thereof was smaller than the visual field range of 256 µm × 166 µm, and therefore the drawn wire rod was cut at any five locations and all of any five cross sections perpendicular to the wire rod longitudinal direction were subjected to the measurement, to thereby providing the measurement results. As the measurement results, the average particle size of the segregated phase was 1.5 µm and the presence density of the segregated phase of 5 µm or more was 0/µm².

### <Example 5>

A metal-covered gadolinium wire rod was obtained in the same manner as in Example 3 except that the copper tube used was a copper tube made of pure copper of C1220, having an inner diameter of 2.7 mm and an outer diameter of 3.0 mm. The resulting metal-covered gadolinium wire rod was then repeatedly extended using a die, with the target wire diameter after drawing being set to 0.25 mm, under a condition where the reduction of area per extending was 20%, thereby providing a drawn wire rod having a wire diameter of 0.25 mm.

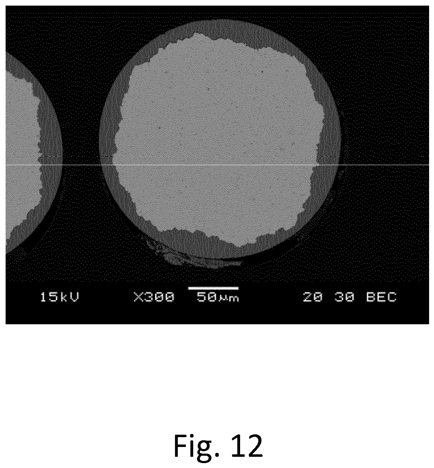

The resulting drawn wire rod was evaluated in the same manner as in Example 3, and it was found that the proportion of the gadolinium wire portion in the cross section of the drawn wire rod was 78% and the amount of change in the surface temperature under the assumption that the change in the surface temperature of the pure gadolinium wire was 100% was 84%. A reflection electron image of the cross section of the drawn wire rod obtained in Example 5 is illustrated in Figure 12.

The resulting drawn wire rod was subjected to measurement of the segregated phase containing fluorine atom and/or chlorine atom (namely, measurement of each of the average particle size of the segregated phase and the presence density of the segregated phase of 5 µm or more) in the same manner as described above. The resulting drawn wire rod, however, was small in wire diameter and the cross-sectional area thereof was smaller than the visual field range of 256 µm × 166 µm, and therefore the drawn wire rod was cut at any five locations and all of any five cross sections perpendicular to the wire rod longitudinal direction were subjected to the measurement, to thereby providing the measurement results. As the measurement results, the average particle size of the segregated phase was 1.5 µm and the presence density of the segregated phase of 5 µm or more was 0/µm².

### <Reference Example 1>

A metal-covered gadolinium wire rod was obtained in the same manner as in Example 3 except that the copper tube used was a copper tube made of pure copper of C1220, having an inner diameter of 2.7 mm and an outer diameter of 3.9 mm. The resulting metal-covered gadolinium wire rod was then repeatedly extended using a die, with the target wire diameter after drawing being set to 0.25 mm, under a condition where the reduction of area per extending was 20%, thereby providing a drawn wire rod having a wire diameter of 0.25 mm.

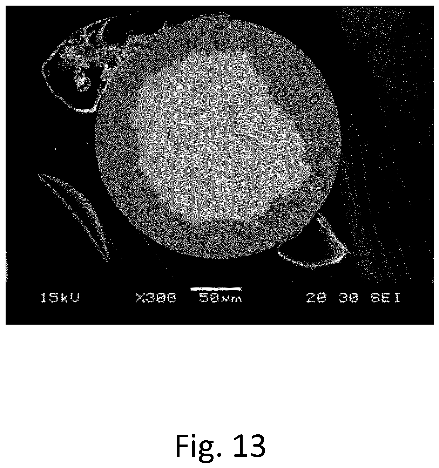

The resulting drawn wire rod was evaluated in the same manner as in Example 3, and it was found that the proportion of the gadolinium wire portion in the cross section of the drawn wire rod was 47% and the amount of change in the surface temperature under the assumption that the change in the surface temperature of the pure gadolinium wire was 100% was 44%. A reflection electron image of the cross section of the drawn wire rod obtained in Reference Example 1 is illustrated in Figure 13.

The resulting drawn wire rod was subjected to measurement of the segregated phase containing fluorine atom and/or chlorine atom (namely, measurement of each of the average particle size of the segregated phase and the presence density of the segregated phase of 5 µm or more) in the same manner as described above. The resulting drawn wire rod, however, was small in wire diameter and the cross-sectional area thereof was smaller than the visual field range of 256 µm × 166 µm, and therefore the drawn wire rod was cut at any five locations and all of any five cross sections perpendicular to the wire rod longitudinal direction were subjected to the measurement, to thereby providing the measurement results. As the measurement results, the average particle size of the segregated phase was 1.5 µm and the presence density of the segregated phase of 5 µm or more was 0/µm².

### [Table 2]

**Table 2**

| | Proportion of area of gadolinium wire (%) | Change in surface temperature relative to 100% of that of pure Gd wire (%) |
|---|---|---|
| Example 3 | 58 | 55 |
| Example 4 | 68 | 69 |
| Example 5 | 78 | 84 |
| Reference Example 1 | 47 | 44 |

The results in Examples 3 to 5 and Reference Example 1 are collectively shown in Table 2. It can be said from Table 2 that the metal-covered gadolinium wire rod of the present invention can allow a drawn wire rod whose wire diameter is as fine as 0.1 to 1.0 mm to be obtained with excellent processability, and the resulting drawn wire rod is also sufficient in the amount of change in the surface temperature and suitable as the magnetic refrigeration material in the magnetic refrigeration technology utilizing the magnetocaloric effect.

## Claims

1. A gadolinium wire rod comprising gadolinium as a main component,
wherein an average particle size of a segregated phase containing fluorine atom and/or chlorine atom is 2 µm or less.

2. A gadolinium wire rod comprising gadolinium as a main component,
wherein a presence density of a segregated phase containing fluorine atom and/or chlorine atom with a particle size of 5 µm or more is 4.7 × 10⁻⁵/µm² or less.

3. The gadolinium wire rod according to claim 1 or 2, wherein the gadolinium wire rod is a drawn wire rod.

4. The gadolinium wire rod according to claim 3, wherein the drawn wire rod has a diameter of 1 mm or less.

5. A metal-covered gadolinium wire rod comprising the gadolinium wire rod according to any of claims 1 to 4 and a clad layer comprising, as a main component, a metal other than gadolinium, the clad layer being provided on an outer periphery of the gadolinium wire rod.

6. The metal-covered gadolinium wire rod according to claim 5, wherein an area of a cross section of the gadolinium wire rod on a cross section of the metal-covered gadolinium wire rod perpendicular to a longitudinal direction thereof is 55 to 99% based on a total of the area of a cross section of the gadolinium wire rod and an area of a cross section of the clad layer.

7. The metal-covered gadolinium wire rod according to claim 5 or 6, wherein the clad layer comprises copper, aluminum, nickel and/or an alloy thereof.

8. The metal-covered gadolinium wire rod according to any of claims 5 to 7, wherein the clad layer further comprises a carbon nanotube.

9. A method for producing a gadolinium wire rod, comprising:
a step of providing a gadolinium casting material comprising gadolinium as a main component; and
a step of hot-processing the gadolinium casting material to provide a gadolinium wire rod.

10. The method for producing a gadolinium wire rod according to claim 9, further comprising a step of drawing the gadolinium wire rod that is hot-processed.

11. A heat exchanger comprising:
a plurality of wire rods formed of a magnetic refrigeration material; and
a case housing the plurality of wire rods;
wherein the wire rods are each the gadolinium wire rod according to any of claims 1 to 4 or the metal-covered gadolinium wire rod according to any of claims 5 to 8.

12. A magnetic refrigerator comprising the heat exchanger according to claim 11.
